# EUROPÄISCHE PATENTSCHRIFT

(11) **EP 1 636 517 B1**
(45) Veröffentlichungstag und Bekanntmachung des Hinweises auf die Patenterteilung: **24.10.2012**
(21) Anmeldenummer: 04729603.3
(22) Anmeldetag: 27.04.2004
(51) Int. Cl.: F16J 15/06, F16J 15/08

(54) **ZYLINDERKOPFDICHTUNG**
CYLINDER HEAD GASKET
JOINT DE CULASSE

(30) Priorität: 24.06.2003 DE 10328158
(43) Veröffentlichungstag der Anmeldung: 22.03.2006
(73) Patentinhaber: Federal-Mogul Sealing Systems GmbH, 57562 Herdorf (DE)
(72) Erfinder: STETTER, Jürgen, 65589 Hadamar-Steinbach (DE); SCHMITT, Klaus, 57520 Grünebach (DE); FLEMMING, Ralf, 57520 Langenbach (DE); WECKBECKER, Klaus, 42929 Wermelskirchen (DE)
(86) Internationale Anmeldenummer: PCT/DE2004/000877
(87) Internationale Veröffentlichungsnummer: WO 2005/010411

(56) Entgegenhaltungen:
- EP-A- 0 872 671
- EP-A- 1 241 383
- US-A- 5 727 791

## Beschreibung

Die Erfindung betrifft eine Zylinderkopfdichtung für eine Brennkraftmaschine, zur Abdichtung von Bauteilen, die mindestens einen, eine T-Stelle bildenden Bereich aufweisen, beinhaltend mindestens eine Funktionslage und mindestens eine Distanzlage sowie mindestens ein zusätzliches Dichtelement, das im Bereich der T-Stelle vorsehbar ist.

Die US 5 727 791 offenbart eine Zylinderkopfdichtung mit einem pastösen Dichtmaterial welches in einer Öffnung einer Metalllage angeordnet ist. Beim Einbau der Dichtung wird durch Deformation einer Dichtungslage das Material in den Dichtspalt gepresst. Eine Vertiefung in einer Distanzlage ist hier nicht vorgesehen.

Die EP 0 872 671 A2 offenbart eine Zylinderkopfdichtung, bei der im Bereich der T-Stelle eine Sicke in einer Funktionslage angeordnet ist. Die Sicke ist mit einem Elastomermaterial gefüllt. Auch hier wird beim Einbau der Dichtung die Metalllage deformiert, eine Distanzlage mit einer Vertiefung ist nicht vorgesehen.

Die DE-A 198 45 320 beschreibt eine Zylinderkopfdichtung für eine Brennkraftmaschine, mit einem, an einem Motorblock seitlich angeschraubten und von der Zylinderkopfdichtung abgedichteten Gehäuse zur Aufnahme von Antriebsmitteln, wobei zur Abdichtung des Gehäuses am stirnseitigen Endbereich der Zylinderkopfdichtung eine aus elastomerem Werkstoff bestehende elastische Dichtung angeordnet ist, die sich im Einbauzustand in einen Spalt erstreckt, der sich durch Motorkopfgehäuse und Zylinderkopf toleranzbedingt ergibt. Am stirnseitigen Endbereich der Zylinderkopfdichtung ist mindestens eine Senkung angeordnet, deren Tiefe vom Endbereich radial nach innen kontinuierlich abnimmt. In der Senkung ist die elastische Dichtung aufgenommen, ohne über den Endbereich der Zylinderkopfdichtung nach außen vorzustehen, wobei die Senkung beim Einbau der Zylinderkopfdichtung infolge der Dichtflächenpressung derart verformbar ist, dass die Dichtung zum stirnseitigen Endbereich verdrängt wird. Hier ist die Gefahr gegeben, dass bei der Verspannung von Zylinderkopf und Motorblock der über den Endbereich der Zylinderkopfdichtung nach außen vorstehende Anteil des Dichtelementes abgeschert wird, so dass eine wirksame Dichtung nicht realisierbar ist.

Eine nach dem gleichen Funktionsprinzip arbeitende Dichtung ist aus der EP 1 241 283 A2 zu entnehmen. Die Dichtung weist keine Distanzlage mit einer Vertiefung auf sondern eine mit einer tascheartigen Senkung versehene Funktionlage, welche beim Einbau deformiert werden muß.

In der EP-A 1 013 974 wird eine Dichtstruktur beschrieben, die ebenfalls T-förmig ausgebildete Dichtbereiche aufweist. Zum Einsatz kommt eine, zumindest aus einer Platte bestehende Flachdichtung, mit Ausnehmungen im T-förmigen Dichtbereich, in welche ein pastenartig ausgebildetes Dichtelement eingebracht ist, das mit der Platte in einer Richtung stirnseitig abschließt und über die andere Stirnseite in Richtung der T-förmigen Dichtstelle über diese Stirnfläche vorsteht. Auch hier kann es geschehen, dass bei der Verpressung der Bauteile eine Abscherung des Dichtelementes stattfindet, so dass in dem T-förmigen Dichtbereich keine ausreichende Abdichtung gewährleistet werden kann.

Vielfach werden derartige Flachdichtungen im Bereich des sogenannten 3-Länderecks einer Brennkraftmaschine, gebildet durch Kettenkasten, Motorkopf und Motorblock eingesetzt. Befindet sich beispielsweise der Motorkopf als Einheit über dem Kettenkasten und dem Motorblock, so kann sich im Extremfall ein Unterstand des Kettenkastens gegenüber dem Motorblock ergeben. Die Abdichtung eines solchen Höhenunterschiedes lässt sich nicht mehr nur durch Dichtelemente, wie sie im Stand der Technik beschrieben werden, realisieren. Die Funktionalität derartiger Dichtelemente ist nur dann gegeben, wenn sie ausschließlich elastisch, d.h. im Kraftnebenschluss, verformt werden.

Der Erfindung liegt die Aufgabe zugrunde, eine gattungsgemäße Zylinderkopfdichtung dahingehend weiterzubilden, dass sie auch zur dauerhaften Abdichtung von Höhenunterschieden zueinander aufweisenden gegeneinander abzudichtender Bauteile einsetzbar, insbesondere im Kraftnebenschluss ausschließlich elastisch und nicht plastisch verformbar ist.

Diese Aufgabe wird erfindungsgemäß durch die Merkmale des Patentanspruch 1 gelöst.

Vorteilhafte Weiterbildungen des Erfindungsgegenstandes sind den Unteransprüchen zu entnehmen.

Der vertiefte Bereich wird vorteilhafterweise durch Prägen erzeugt, wobei das Dichtelement den vertieften Bereich nur partiell ausfüllt, jedoch über den Öffnungsbereich vorsteht. Beim Verpressen der abzudichtenden Bauteile, insbesondere im Vorab angesprochenen 3-Ländereck, kann nun das elastisch verformbare Material des Dichtelementes in den noch gegebenen Freiraum des vertieften Bereiches ausweichen und selbigen zumindest partiell elastisch ausfüllen. Durch diese Maßnahme wird eine Zerstörung des zusätzlichen Dichtelementes, da es ausschließlich elastisch, d.h. im Kraftnebenschluss verformt wird, in jedem Fall ausgeschlossen.

Das zusätzliche Dichtelement ist durch eine, in den vertieften Bereich eingebrachte z.B. eingespritzte Silikonraupe gebildet, die - wie bereits angesprochen - nur Teilbereiche des vertieften Bereiches ausfüllt. Die Distanzlage wirkt dichtelementseitig mit mindestens einer Funktionslage zusammen, die im Bereich des Dichtelementes mit einer Aussparung versehen ist.

Der Querschnitt des vertieften Bereiches ist hierbei ein anderer als derjenige der Aussparung der Funktionslage im Bereich des Dichtelementes, wobei, einem weiteren Gedanken der Erfindung gemäß, der geprägte vertiefte Bereich bezüglich seiner Fläche vorzugsweise größer als die Aussparung der Funktionslage ist.

Hierdurch wird ermöglicht, dass eine größere Materialmenge für die Silikonraupe im vertieften Bereich einbringbar ist, wobei gleichzeitig der Bereich des Kraftnebenschlusses für diese Raupe vergrößert wird. Dies schließt ein, dass auch noch außerhalb der Aussparung unterhalb der Funktionslage keine Zerstörung der Silikonraupe stattfindet, da auch hier noch durch den vertieften Bereich ein Kraftnebenschluss vorliegt.

Durch eine gezielte Kombination von vertieftem Bereich der Distanzlage und Aussparung, respektive weiterführender Ausnehmung in der Funktionslage, kann die Fließbewegung der Silikonraupe bei der Verpressung der abzudichtenden Bauteile dergestalt beeinflusst werden, dass sich die Silikonraupe gezielt in Bereiche verformen, d.h. ausdehnen kann, in denen Platz, respektive zusätzlicher Fließraum, vorgesehen ist, in welchen sich das Silikonmaterial zerstörungsfrei ausdehnen kann.

Der Erfindungsgegenstand ist anhand eines Ausführungsbeispieles in der Zeichnung dargestellt und wird wie folgt beschrieben. Es zeigen:
- Figur 1: Prinzipskizze einer möglichen Bauform einer Brennkraftmaschine;
- Figur 2: Teilansicht einer Zylinderkopfdichtung zur Abdichtung der in Figur 1 prinzipiell dargestellten Bauform;
- Figur 3: Teilansicht der Zylinderkopfdichtung gemäß Figur 2 im Bereich Motorblock - Kettenkasten;
- Figur 4: Teilansicht des zusätzlichen Dichtbereiches gemäß Figur 3 einerseits in der Draufsicht und andererseits in verschiedenen Schnitten;
- Figur 5: Alternativ zu Figur 4 gestalteter zusätzlicher Dichtbereich;
- Figur 6: Weitere Alternative zu Figuren 4 und 5;
- Figur 7: Draufsicht auf einen zusätzlichen Dichtbereich ohne Dichtelement;
- Figur 8: Teilansicht der Funktionslage gemäß Figur 7;
- Figur 9: Teilansicht der Distanzlage gemäß Figur 7;
- Figur 10: Teilansicht der Zylinderkopfdichtung gemäß Figur 2 im eingebauten Zustand, einerseits in der Draufsicht und andererseits in verschiedenen Schnitten.

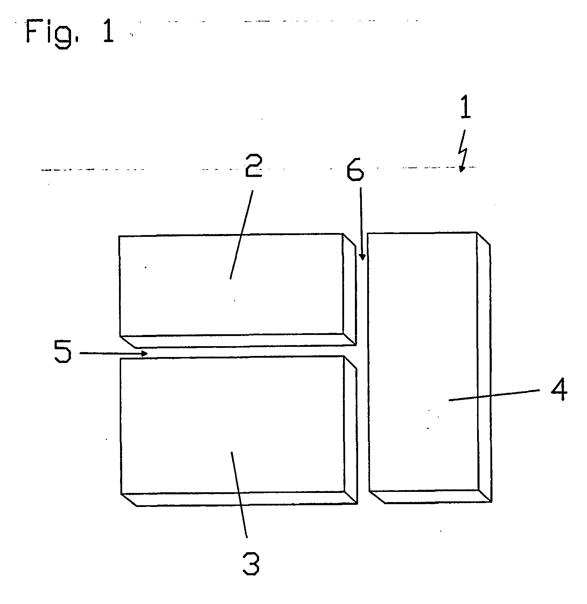

Figur 1 zeigt eine mögliche Bauform einer Brennkraftmaschine 1, beinhaltend einen Zylinderkopf 2, einen Zylinderblock 3 sowie einen Kettenkasten 4. Im Spalt 5 zwischen Zylinderkopf 2 und Zylinderblock 3 wird eine hier nicht dargestellte Zylinderkopfdichtung positioniert, die auch den Spalt 6 zwischen Zylinderkopf 2 /Zylinderblock 3 und Kettenkasten 4 übergreift. Die Spalten 5,6 definieren die sogenannte T-Schnittstelle.

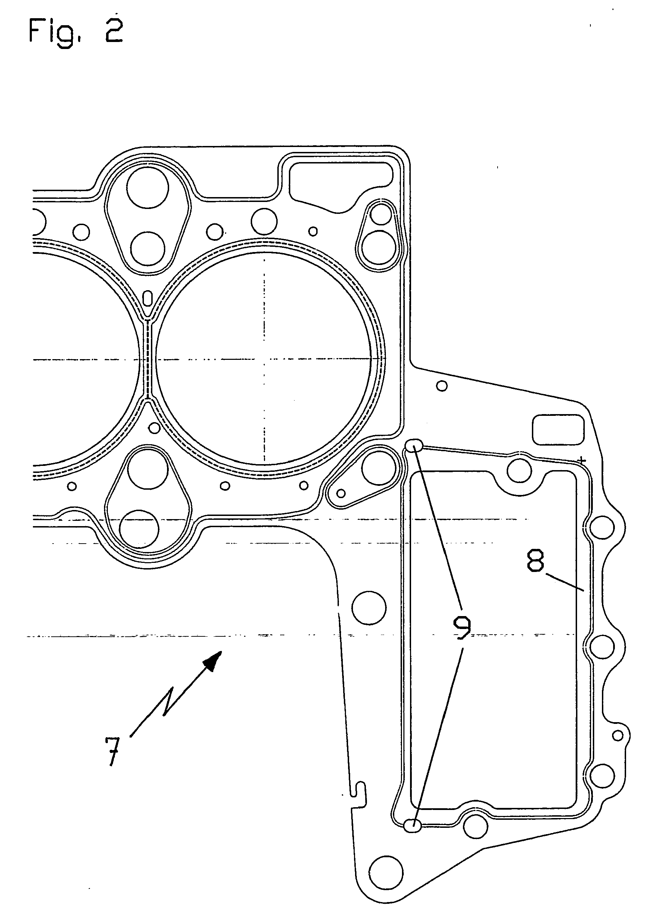

Figur 2 zeigt eine nur angedeutete Zylinderkopfdichtung 7, wobei der Bereich 8 zur Abdichtung des Kettenkastens 4 vorgesehen ist. Die Zylinderkopfdichtung 7 ist - wie in den folgenden Figuren näher definiert - mehrlagig ausgebildet und ist im Bereich der hier nicht erkennbaren T-Stelle (Spalten 5,6) mit zusätzlichen Dichtbereichen 9 versehen.

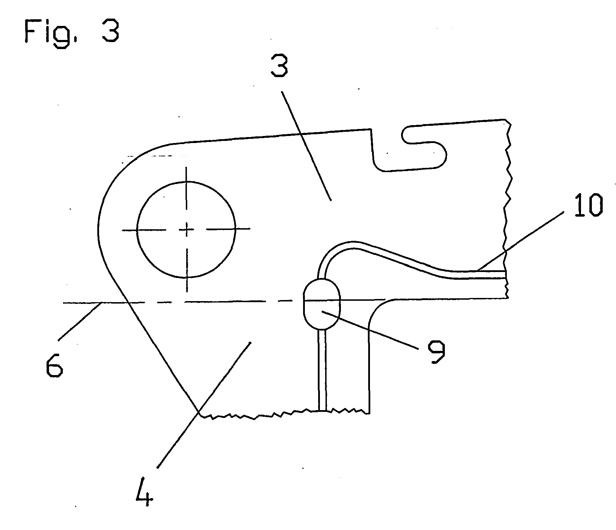

Figur 3 zeigt als Teilansichten die zusätzlichen Dichtbereiche 9, die den Spalt 6 zwischen Zylinderblock 3 und Kettenkasten 4 abdecken. Zwischen den Dichtbereichen 9 sind in diesem Beispiel Halbsicken 10 vorgesehen.

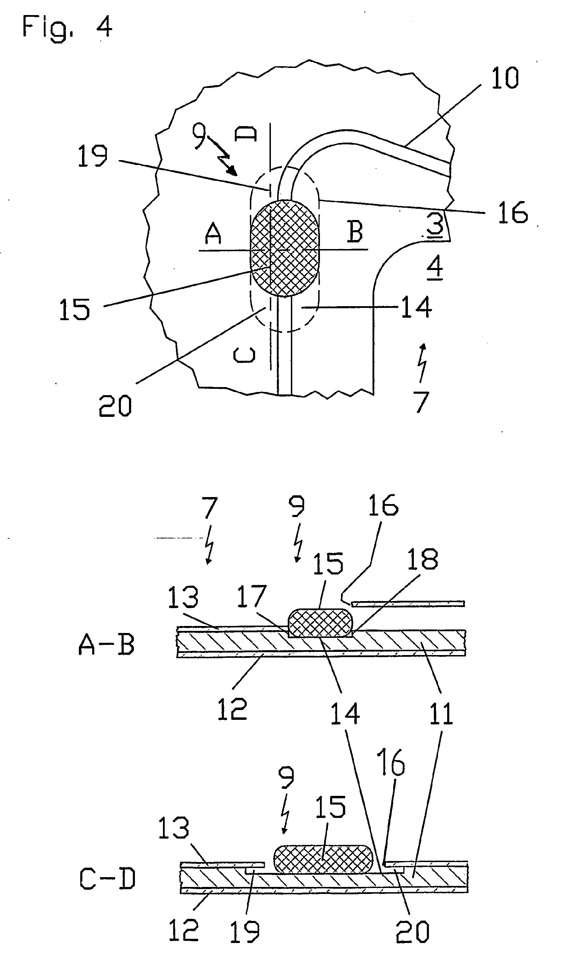

Figur 4 zeigt eine Teilansicht der Figur 3. Erkennbar ist der weitere, in diesem Beispiel oval gestaltete Dichtbereich 9, einerseits in der Draufsicht und andererseits in den Schnitten A-B, C-D. Ferner erkennbar ist die Halbsicke 10. Angedeutet sind der Zylinderblock 3 sowie der Kettenkasten 4. Die Zylinderkopfdichtung 7 wird in diesem Beispiel gebildet aus einer Distanzlage 11 und zwei Funktionslagen 12,13. In die Distanzlage 11 ist erfindungsgemäß, insbesondere durch Prägen, ein vertiefter Bereich 14 eingebracht, der ein zusätzliches Dichtelement 15 in Form einer elastischen Silikonraupe aufnimmt. Die dichtelementseitige Funktionslage 13 ist mit einer Aussparung 16 versehen, die - wie insbesondere dem Schnitt C-D zu entnehmen ist - den vertieften Bereich 14 zum Teil überdeckt. Somit ist die Querschnittsfläche des vertieften Bereiches 14 größer als diejenige der Ausnehmung 16 in der Funktionslage 13. In diesem Beispiel soll die Silikonraupe 15 zumindest partiell Randbereiche 17,18 des vertieften Bereiches 14 berühren, darüber hinaus jedoch innerhalb des vertieften Bereiches 14 Freiräume 19,20 bilden. Die Höhe der Silikonraupe 15 ist größer als die Summe der Tiefe des vertieften Bereiches sowie die Wandstärke der Funktionslage 13, so dass sie mit vorgebbarem Abstand über beide hinausragt. Beim Verpressen der hier nicht weiter dargestellten Bauteile 3,4,5 (Figur 1) kann nun das Material der Silikonraupe 15 elastisch in die Freiräume 19,20 ausweichen, ohne das es zu plastischen Verformungen, insbesondere zum Abscheren der Silikonraupe 15 kommen kann.

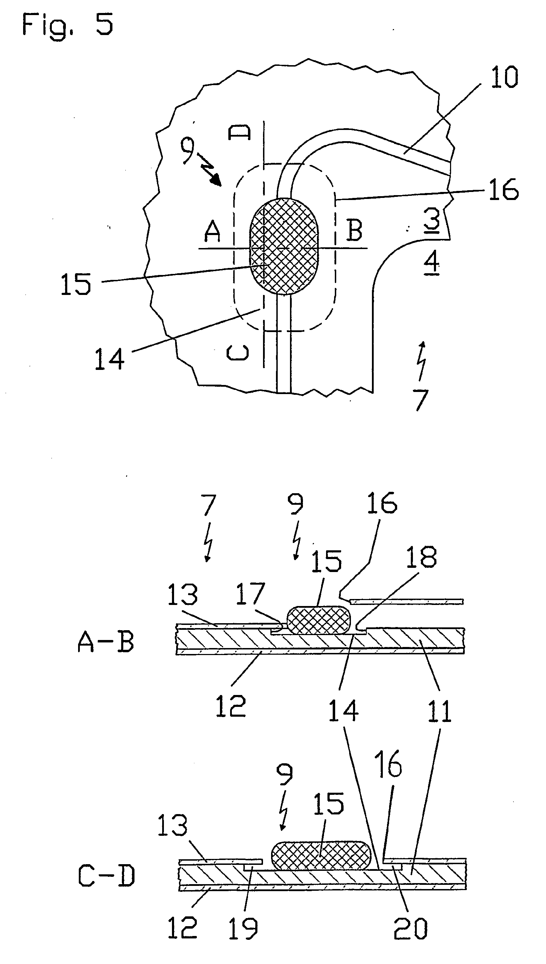

Figur 5 zeigt einen zu Figur 4 alternativen Dichtbereich 9. Gleiche Elemente sind mit gleichen Bezugszeichen versehen.

Das ebenfalls als Silikonraupe ausgebildete zusätzliche Dichtelement 15 liegt in diesem Beispiel - abweichend zu Figur 4 - nicht an Randbereichen 17,18 des vertieften Bereiches 14 an. Vielmehr füllt das Dichtelement 15 den vertieften Bereich 14 nur partiell aus, so dass rundherum freie Ausweichbereiche gebildet werden. Auch hier ist in die Distanzlage 11 der vertiefte Bereich 14 insbesondere eingeprägt.

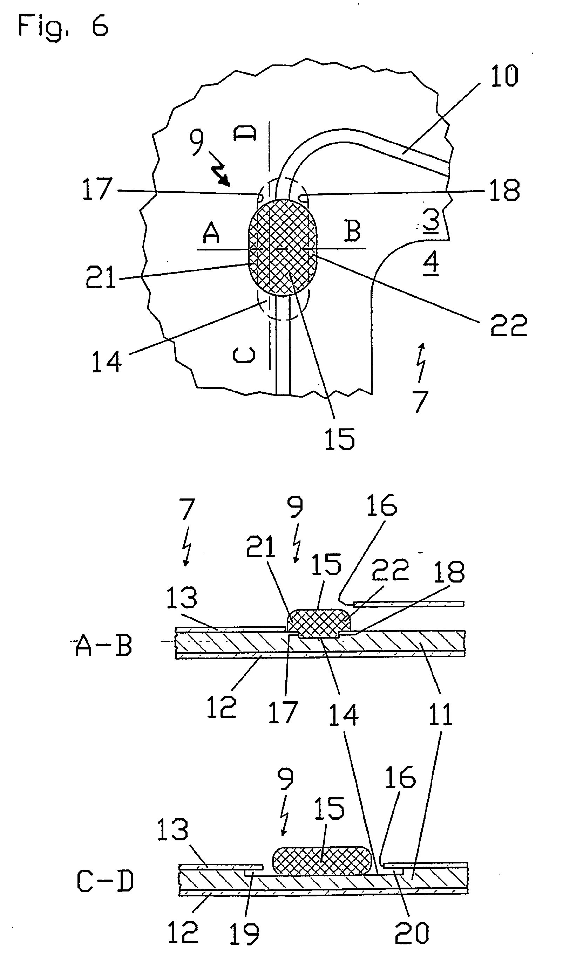

Figur 6 zeigt einen zu den Figuren 4 und 5 weiteren alternativen Dichtbereich 9. Auch hier sind gleiche Elemente mit gleichen Bezugszeichen versehen. Das zusätzliche Dichtelement 15 füllt den vertieften Bereich 14 ebenfalls nur partiell aus. In diesem Beispiel wird jedoch ein größerer Randbereich 17,18 des vertieften Bereiches 14 vom Dichtelement 15 bestrichen, wobei auch Materialüberstände 21,22 gebildet werden, die sich neben der Funktionslage 13 auf der Distanzlage 11, zumindest partiell abstützen.

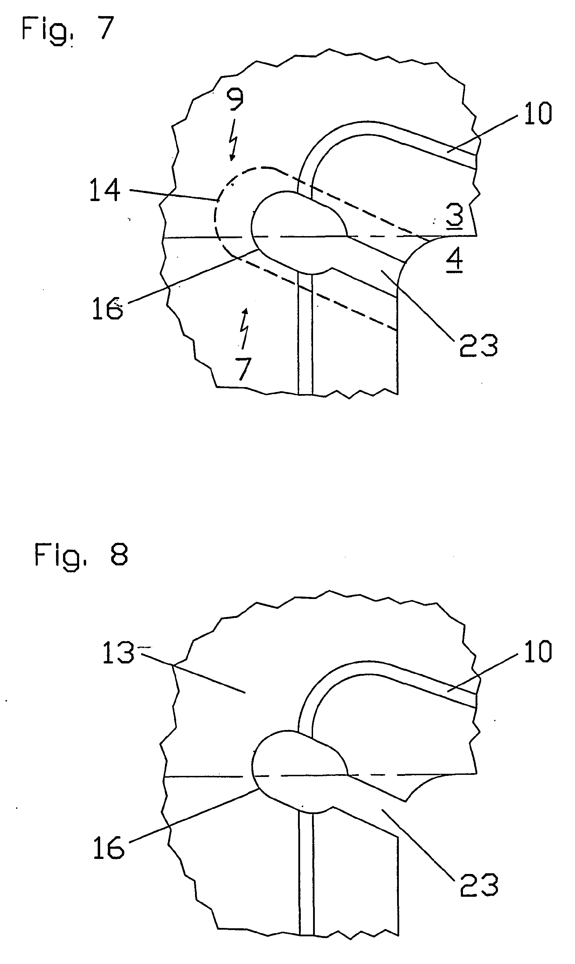

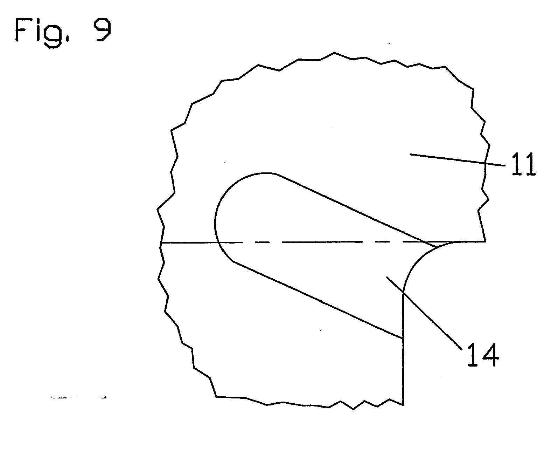

Die Figuren 7 bis 9 zeigen einerseits eine Draufsicht auf die Zylinderkopfdichtung 7, insbesondere den Dichtbereich 9, diesmal jedoch ohne Dichtelement. Erkennbar sind die Halbsicke 10, der vertiefte Bereich 14, die Aussparung 16 sowie eine sich an die Aussparung 16 anschließende, in der Funktionslage 13 eingebrachte Ausnehmung 23, die einen sogenannten Verdrängungskanal für elastisch ausweichendes Material des Dichtelementes bildet, sofern der vertiefte Bereich 14 zur Aufnahme desselben nicht ausreicht.

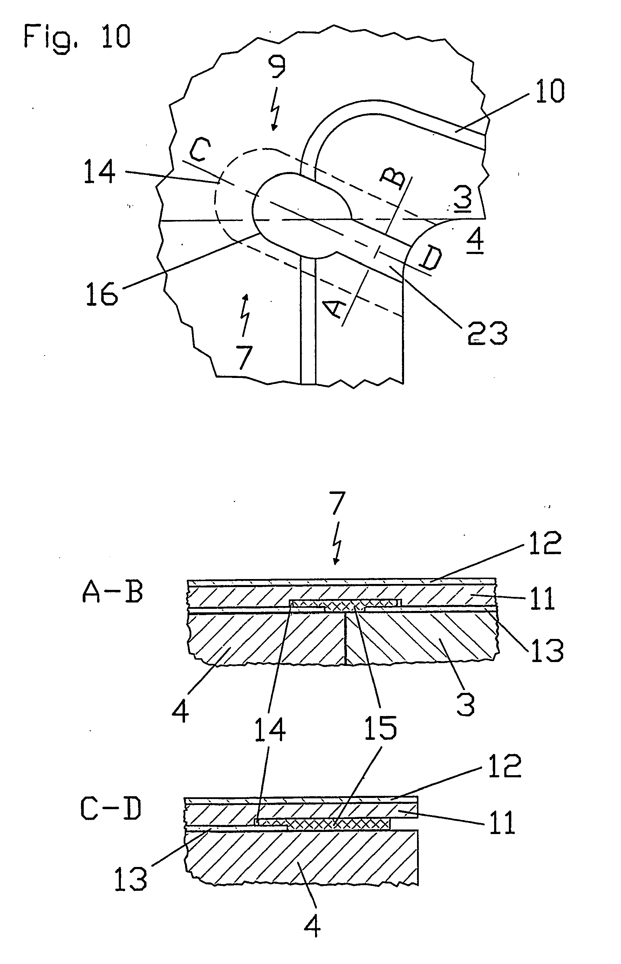

Figur 10 zeigt ein mögliches Anwendungsbeispiel im Einbauzustand. Gleiche Elemente sind auch hier mit gleichen Bezugszeichen versehen. Erkennbar sind der Zylinderblock 3 und der Kettenkasten 4 sowie die Zylinderkopfdichtung 7, gebildet durch die Distanzlage 11 sowie die Funktionslagen 12 und 13. Im vertieften Bereich 14 der Distanzlage 11 ist das aus einer Silikonraupe bestehende Dichtelement 15 angeordnet, das durch Verspannen des hier nicht weiter dargestellten Zylinderkopfes gegenüber dem Zylinderblock 3 sowie dem Kettenkasten 4 verpresst wird und in die umgebenden Freiräume (Bezugszeichen in den Detailzeichnungen erkennbar) elastisch ausweicht.

## Patentansprüche

1. Zylinderkopfdichtung (7) für eine Brennkraftmaschine zur Abdichtung von Bauteilen (2,3,4), die mindestens einen, eine T-Stelle (5,6) bildenden Bereich aufweisen, beinhaltend mindestens eine Funktionslage (12,13) und mindestens eine Distanzlage (11) sowie mindestens ein zusätzliches Dichtelement (15), das im Bereich der T-Stelle (5,6) vorsehbar ist, wobei die Distanzlage (11) zumindest im Bereich der T-Stelle (5,6) mit mindestens einem zur Aufnahme des zusätzlichen Dichtelementes (15) dienenden vertieften Bereich (14) versehen ist und wobei die Distanzlage (11) im Bereich des Dichtelementes (15) mit mindestens einer Funktionslage (13) zusammenwirkt, die dichtelementseitig mit einer Aussparung (16) versehen ist und der vertiefte Bereich (14) eine größere Querschnittsfläche als die Aussparung (16) aufweist **dadurch gekennzeichnet, dass** das jeweilige Dichtelement (15) durch mindestens eine in den jeweiligen vertieften Bereich (14) eingebrachte, insbesondere eingespritzte, Silikonraupe gebildet ist, und dass im nicht-eingebauten zustand, die Höhe der silikonraupe (15) gröper als die Summe der Tiefe des vertieften Bereiches (14) sowie Wandstäke der Furkstionslage (13) ist, so dass sie mit vorgebbarem 1 Abstand über beide hin aunagt.

2. Zylinderkopfdichtung nach Anspruch 1, **dadurch gekennzeichnet, dass** zumindest Teile der Aussparung (16) über dem vertieften Bereich (14), im wesentlichen parallel dazu verlaufend, vorgesehen sind.

3. Zylinderkopfdichtung nach einem der Ansprüche 1 bis 2, **dadurch gekennzeichnet, dass** der vertiefte Bereich (14) etwa oval ausgebildet ist.

4. Zylinderkopfdichtung nach einem der Ansprüche 1 bis 3, **dadurch gekennzeichnet, dass** das Dichtelement (15) dergestalt im vertieften Bereich (14) angeordnet ist, dass es sich zumindest partiell an Randbereichen (17,18) des vertieften Bereiches (14) abstützt, so dass beim Verpressen der Bauteile (2,3,4) das Dichtelement (15) in Freiräume (19,20) ausweicht.

5. Zylinderkopfdichtung nach einem der Ansprüche 1 bis 4, **dadurch gekennzeichnet, dass** das Dichtelement (15) ohne Kontakt zu den Rändern (17,18) des vertieften Bereiches (14) darin eingebracht ist.

6. Zylinderkopfdichtung nach Anspruch 5, **dadurch gekennzeichnet, dass** das Dichtelement (15) dergestalt im vertieften Bereich (14) angeordnet ist, dass es an Teilbereichen der Randbereiche (17,18) des vertieften Bereiches (14) anliegt und außerhalb des vertieften Bereiches (14) zumindest partiell, sich auf der Distanzlage (11) abstützend, über die Randbereiche (17,18) vorsteht.

7. Zylinderkopfdichtung nach einem der Ansprüche 1 bis 6, **dadurch gekennzeichnet, dass** im Bereich der dem Dichtelement (15) zugewandten Aussparung (16) der Funktionslage (13) mindestens eine sich an die Aussparung (16) anschließende Ausnehmung (23) vorgesehen ist.

## Claims

1. Cylinder head gasket (7) for an internal combustion engine for sealing structural components (2, 3, 4), which comprise at least one region forming a T-junction (5, 6), containing at least one function layer (12, 13) and at least one spacing layer (11) and also at least one additional sealing element (15), which can be provided in the region of the T-junction (5, 6), wherein the spacing layer (11) is provided at least in the region of the T-junction (5, 6) with at least one depressed region (14) serving to accommodate the additional sealing element (15) and wherein the spacing layer (11) cooperates in the region of the sealing element (15) with at least one function layer (13) that is provided with a recess (16) on the sealing element side and the depressed region (14) has a larger cross-sectional area than the recess (16), **characterised in that** the respective sealing element (15) is formed by at least one silicone bead introduced, in particular injection moulded, into the respective depressed region (14), and that in the non-installed state the height of the silicone bead (15) is greater than the sum of the depth of the depressed region (14) as well as the wall thickness of the function layer (13), so that it projects a predeterminable distance over both.

2. Cylinder head gasket according to claim 1, **characterised in that** at least parts of the recess (16) are provided over the depressed region (14), running substantially parallel thereto.

3. Cylinder head gasket according to one of claims 1 and 2, **characterised in that** the depressed region (14) is formed roughly oval-shaped.

4. Cylinder head gasket according to one of claims 1 to 3, **characterised in that** the sealing element (15) is arranged in the depressed region (14) in such a way that it is supported at least partially on edge regions (17, 18) of the depressed region (14), so that when the structural parts (2, 3, 4) are pressed in, the sealing element (15) expands into free spaces (19, 20).

5. Cylinder head gasket according to one of claims 1 to 4, **characterised in that** the sealing element (15) is introduced into the depressed region (14) without contacting the edges (17, 18) thereof.

6. Cylinder head gasket according to claim 5, **characterised in that** the sealing element (15) is arranged in such a way in the depressed region (14) that it abuts against partial regions of the edge regions (17, 18) of the depressed region (14), and outside the depressed region (14) projects at least partially, supported on the spacing layer (11), over the edge regions (17, 18).

7. Cylinder head gasket according to one of claims 1 to 6, **characterised in that** in the region of the recess (16) facing towards the sealing element (15) the function layer (13), is provided with at least one groove (23) adjoining the recess (16).

## Revendications

1. Joint de culasse (7) destiné à un moteur à combustion interne, en vue d'assurer l'étanchéité de pièces structurelles (2, 3, 4) qui comportent au moins une région formant une zone en T (5, 6), comprenant au moins une couche fonctionnelle (12, 13) et au moins une couche d'espacement (11), ainsi qu'au moins un élément additionnel d'étanchement (15) pouvant être prévu dans la région de ladite zone en T (5, 6), ladite couche d'espacement (11) étant munie, au moins dans la région de ladite zone en T (5, 6), d'au moins une région encaissée (14) servant à recevoir ledit élément additionnel d'étanchement (15), ladite couche d'espacement (11) coopérant, dans la région dudit élément d'étanchement (15), avec au moins une couche fonctionnelle (13) pourvue d'une dépouille (16) côté élément d'étanchement, et ladite région encaissée (14) présentant une aire de section transversale plus grande que celle de ladite dépouille (16), **caractérisé par le fait que** l'élément respectif d'étanchement (15) est formé d'au moins une chenille de silicone insérée, notamment injectée dans la région encaissée (14) considérée ; et **par le fait qu'**à l'état non intégré, la hauteur de ladite chenille de silicone (15) est supérieure à la somme de la profondeur de ladite région encaissée (14) et de l'épaisseur de paroi de la couche fonctionnelle (13), de telle sorte qu'elle soit en débord au-delà de l'une et de l'autre, d'une distance pouvant être préétablie.

2. Joint de culasse selon la revendication 1, **caractérisé par le fait qu'**au moins des parties de la dépouille (16) sont prévues au-dessus de la région encaissée (14), vis-à-vis de laquelle elles s'étendent pour l'essentiel parallèlement.

3. Joint de culasse selon l'une des revendications 1 à 2, **caractérisé par le fait que** la région encaissée (14) est de réalisation sensiblement ovale.

4. Joint de culasse selon l'une des revendications 1 à 3, **caractérisé par le fait que** l'élément d'étanchement (15) occupe, dans la région encaissée (14), une position telle qu'il prenne au moins partiellement appui contre des zones marginales (17, 18) de ladite région encaissée (14), de manière que ledit élément d'étanchement (15) s'insinue dans des espaces libres (19, 20) au cours du bridage des pièces structurelles (2, 3, 4).

5. Joint de culasse selon l'une des revendications 1 à 4, **caractérisé par le fait que** l'élément d'étanchement (15) est inséré dans la région encaissée (14) sans aucun contact avec les bords (17, 18) de cette dernière.

6. Joint de culasse selon la revendication 5, **caractérisé par le fait que** l'élément d'étanchement (15) occupe, dans la région encaissée (14), une position telle qu'il soit en applique contre des régions partielles des zones marginales (17, 18) de ladite région encaissée (14), et qu'il soit au moins partiellement en débord au-delà desdites zones marginales (17, 18), à l'extérieur de ladite région encaissée (14), en prenant appui contre la couche d'espacement (11).

7. Joint de culasse selon l'une des revendications 1 à 6, **caractérisé par le fait qu'**au moins un évidement (23), situé dans la continuité de la dépouille (16), est prévu dans la région de ladite dépouille (16) de la couche fonctionnelle (13) qui pointe vers l'élément d'étanchement (15).
